# EUROPEAN PATENT APPLICATION

(11) **EP 2 518 308 A1**
(43) Date of publication of application: **31.10.2012**
(21) Application number: 11164254.2
(22) Date of filing: 29.04.2011
(51) Int. Cl.: F03D 7/04

(54) **Controlling the operation of a wind turbine based on a terrain class parameter value**

(71) Applicant: Siemens Aktiengesellschaft, 80333 München (DE)
(72) Inventor: Esbensen, Thomas, 7400, Herning (DK); Laurberg, Hans, 8000, Århus C (DK)

(57) **Abstract**

It is described a method for controlling the operation of a wind turbine. The method comprises (a) measuring the actual value (270a) of an operating variable of the wind turbine (100), (b) obtaining the value (290a) of a terrain class parameter being indicative for the type of the terrain, in which the wind turbine is erected, (c) determining a control reference signal (260a) for a control action of the wind turbine (100) based on the measured actual value (270a) of the operating variable and on the obtained value (290a) of the terrain class parameter, and (d) controlling the operation of the wind turbine (100) based on the determined control reference signal (260a). Further, it is described a control system (150, 250) for controlling the operation of a wind turbine (100), a wind turbine (100) being equipped with such a control system (150, 250), and a computer program, which is adapted for controlling and/or for carrying out the mentioned operational control method.

## Description

### Field of invention

The present invention generally relates to the technical field of wind turbines. In particular, the present invention relates to a method for controlling the operation of a wind turbine based on a control reference signal, wherein the control reference signal has been determined in dependency of a measured actual value of an operating variable of the wind turbine. Further, the present invention relates to a control system for controlling the operation of a wind turbine, to a wind turbine being equipped with such a control system and to a computer program, which is adapted for controlling and/or for carrying out the mentioned operational control method.

### Art Background

An optimal power production of wind turbines at below rated power depends on the ability to apply an optimal pitch angle (the pitch angle is the angle between the blade chord line and the rotor plane of rotation) and track the optimal rotor tip speed ratio (TSR = the speed of the blade at its tip divided by the speed of the wind) at below rated rotational speed. A controller of the wind turbine accomplishes this by setting a predetermined pitch angle and a generator (or converter) reference power or torque to bring the torque provided by the generator into balance with the aerodynamic torque acting on the rotor. Typically, the pitch angle reference is fixed and the power (or torque) reference is set as a function of the actual rotational speed of the rotor or the measured or estimated wind speed.

It is mentioned that for a rated speed operation of the wind turbine the power (or torque) control reference signal is typically adjusted to maintain the nominal speed of the rotor for changing wind speeds. For a rated power operation of the wind turbine the pitch angle(s) is typically adjusted to limit the efficiency of the wind-capturing rotor to the rated power.

Specifically, the efficiency of a wind turbine operation may strongly depend on a proper choice for at least one control reference signal such as the control reference signal for the pitch angle and/or the control reference signal for the generated power (or torque).

Therefore, there may be a need for providing a control procedure for the operation of a wind turbine, wherein an appropriate level or value of a control reference signal value is determined for operating the wind turbine in an efficient manner.

### Summary of the Invention

This need may be met by the subject matter according to the independent claims. Advantageous embodiments of the present invention are described by the dependent claims.

According to a first aspect of the invention there is provided a method for controlling the operation of a wind turbine. The provided method comprises (a) measuring the actual value of an operating variable of the wind turbine, (b) obtaining the value of a terrain class parameter being indicative for the type of the terrain, in which the wind turbine is erected, (c) determining a control reference signal for a control action of the wind turbine based on (c1) the measured actual value of the operating variable and on (c2) the obtained value of the terrain class parameter, and (d) controlling the operation of the wind turbine based on the determined control reference signal.

The described method is based on the idea that different environmental aerodynamic properties, conditions or aspects of a site, at which a wind turbine may be erected, are not independent from each other and can be clustered into different terrain classes each possessing certain characteristics which can be employed in order to find an appropriate level or value for the control reference signal being used for controlling the operation of the wind turbine. Mathematically speaking one may say that different environmental conditions of a site couple to specific terrain classes.

Using an appropriate terrain specific reference value may help in operating the wind turbine in such a manner that an optimal compromise between the following three major targets in wind turbine control can be achieved: (a) Maximization of the generated electrical power, (b) Reduction of mechanical loads acting on structural components of the wind turbine (in particular the rotor blades and the tower), and (c) Reduction of acoustic noise emissions.

The operating variable and the control reference signal respectively the control action may relate to different physical quantities or alternatively to one and the same physical quantity being suitable for describing the operational condition of the wind turbine.

The term control reference signal for the control action of the wind turbine may be understood in such a manner that the control reference signal represents the control action of the wind turbine or that the control action for the wind turbine is dictated by the control reference signal. Thereby, the control reference signal may be an output signal of a wind turbine controller and the control action may the actual physical action of the wind turbine, e.g. a change of the blade pitch angle.

According to an embodiment of the invention the value of the terrain class parameter depends on at least one environmental aerodynamic property of the terrain, in which the wind turbine is erected.

Preferably, the environmental aerodynamic property is determined and/or estimated before a decision is made to erect the wind turbine at the respective site. In this case valuable prior information about the site is used to adapt the control procedure for the wind turbine specifically to the site of its erection.

It is pointed out that the described terrain class may be defined by one environmental aerodynamic property or by more environmental aerodynamic properties of the site at which the wind turbine is erected. Therefore, obtaining the value of the terrain class parameter may also mean to obtain the at least one environmental aerodynamic property, e.g. with the help of one or more corresponding values describing the at least one environmental aerodynamic property. Of course, in this case the control behavior of control action, i.e. the control reference signal is then a function of this at least one environmental aerodynamic property.

Descriptive speaking, the value of the terrain class parameter may also (or in addition) be defined with the at least one environmental aerodynamic property. This means that a corresponding wind turbine controller which is carrying out the described control method is configured by the value of the terrain class parameter and/or directly by at least one environmental aerodynamic property of the site at which the wind turbine is erected.

According to a further embodiment of the invention the method further comprises estimating the at least one environmental aerodynamic property during an operation of the wind turbine. Thereby, a wind turbine controller which is carrying out the described control method can be automatically adjusted, adopted and/or configured with an improved controller setting. Compared to an initial guess of the at least one environmental aerodynamic property this improved controller setting may be more precisely adopted to the real at least one environmental aerodynamic property of the site of the wind turbine.

In this respect it is mentioned that at least some of the environmental aerodynamic properties can be estimated from corresponding sensors or operational parameters during operation of the wind turbine. E.g. wind turbulence level can be derived using e.g. wind sensor, and air density can be measured or derived from other quantities.

It is further mentioned that in controller configuration one would typically use either the average value or an extreme (minimum/maximum) value of the respective environmental aerodynamic property. However, it is clear that these values can of course not be determined from instant measurements, but could be averaged or determined over longer time. Therefore, the described estimation will also just be an approximation of the exact environmental aerodynamic property.

According to a further embodiment of the invention the environmental aerodynamic property is at least one of the group comprising (a) the wind shear, (b) the air density, (c) the inclination angle of the wind, (d) the turbulence intensity, and (e) the wind direction stability. Preferably, two, more or even all of these environmental aerodynamic properties are taken into account in order to determine the value of the terrain class parameter.

It is mentioned that the values of all the above mentioned quantities for the environmental aerodynamic property may be an average or a typical value. Alternatively, one or more or all of these values may be extreme (i.e. minimum, maximum, best case, worst case) values.

Specifically, with respect to the inclination angle of the wind it is mentioned that this angle may strongly depend on the wind direction. Therefore, here it may make sense to specify e.g. the average angle and/or the worst-case angle.

According to a further embodiment of the invention the value of the terrain class parameter describes one of the group comprising at least (a) an offshore terrain, (b) a forest terrain, (c) a valley, (d) a coastal terrain, (e) a city terrain, (f) a low vegetation zone, (g) a hill, (h) a cliff, (i) a small mountain, (j) a medium mountain, and (k) a high mountain. This may provide the advantage that the available values of the terrain class parameter are easily understandable by a user. This may significantly lower the risks of wrong parameter settings which are used for the operational control of a wind turbine. Further, since there may be only one variable acceptable by a corresponding wind turbine controller, the error possibilities may be further limited.

It is mentioned that the values of some of the terrain class parameters (e.g. the offshore terrain value) are nondirectional and unit less. Other values may have a direction such as for instance the direction to the cliff or the direction of the gradient of a hill side. Other values may have a unit such as for instance the height of trees surrounding the erected wind turbine of a forest terrain.

Having different values for the terrain class parameter available may provide the advantage that optimized settings of the wind turbine controller can easily be managed and adapted.

According to a further embodiment of the invention the method further comprises measuring the actual value of at least one further operating variable of the wind turbine. Thereby, determining the control reference signal for the control action of the wind turbine is further based on the measured actual value of the further operating variable.

By taking into account not only one but two, three or even more actual values of operating variables of the wind turbine an even more specific and more efficient location specific control of the wind turbine can be realized.

According to a further embodiment of the invention the operating variable is a first input signal for a controller of the wind turbine and in particular one of (a) the power production of the wind turbine, (b) the rotational speed of the wind turbine rotor, and (c) the acceleration of the wind turbine tower. Further, the further operating variable is a second input signal for a controller of the wind turbine and in particular another one of (a) the power production of the wind turbine, (b) the rotational speed of the wind turbine rotor and (c) the acceleration of the wind turbine tower. This may provide the advantage that for an efficient operational control of the wind turbine the actual values of highly relevant operating variables are taken into account. This may allow for controlling the operation of the wind turbine with location / terrain specific settings of a wind turbine controller.

According to a further embodiment of the invention the method further comprises determining a further control reference signal for a further control action of the wind turbine based on (a) the measured actual value of the operating value and/or the measured actual value of the further operating variable and on (b) the obtained value of the terrain class parameter. Thereby, controlling the operation of the wind turbine is based on the determined control reference signal and on the determined further control reference signal.

By controlling the operation of the wind turbine by means of two control reference signals each relating to a different physical (actuating) variable for the wind turbine operation one may achieve an even more location specific and even more improved operational control of a wind turbine being erected at a site corresponding to the respective terrain class parameter value.

According to a further embodiment of the invention the control action of the wind turbine is related to one variable of the group comprising the pitch angle of at least one blade of the wind turbine, the yaw angle of the wind turbine and the electric power and/or torque being generated by the wind turbine and the further control action is related to another variable of the group comprising the pitch angle of at least one blade of the wind turbine, the yaw angle of the wind turbine and the electric power and/or torque being generated by the wind turbine. This may provide the advantage that two operational actions of the wind turbine can be precisely carried out with respect to a respective appropriate control reference signal, which operational actions are highly relevant for an efficient location specific wind turbine control. Specifically, by adapting the pitch angle reference and the power or torque reference to the local environment of the wind turbine the wind turbine can be efficiently operated in such a manner that an optimal compromise can be achieved between (a) a maximal electric power production, (b) a reduction of the mechanical loads acting e.g. on the rotor blade(s) and/or the tower of the wind turbine, and (c) a reduction of acoustic noise emissions.

It is pointed out that the above mentioned variables are only descriptive examples. It is of course also possible that control reference signals for other variables which have an impact on the operation of the wind turbine are used.

In this respect it is mentioned that the amount of power production is directly correlated with the torque, which is caused by the electric generator of the wind turbine and which acts on the rotor shaft of the wind turbine. Therefore, the electric power control reference signal can also be denominated as a torque control reference signal.

According to a further embodiment of the invention the value of the terrain class parameter is indicative for the value of at least one controller setting parameter taken from (a) a nominal or rated rotational speed of the rotor of the wind turbine, (b) a nominal or rated power generation of the wind turbine, (c) a rotational speed versus power curve or rotational speed versus torque curve, (d) a pitch curve, (e) one or more controller gains, (f) one or more controller limits, and (g) one or more safety limits. Thereby, the control reference signal for the control action is determined based on the value of the at least one controller setting parameter. This may provide the advantage that the described method will be capable of providing the optimal controller settings for each type of site.

It is mentioned that the above given list is not terminatory. The terrain class parameter may rather have an effect on any coefficient, parameter or setting of the wind turbine controller.

The optimal controller settings may be based on simulation and/or field testing results. Further, it may be possible to transfer the knowledge about the value of a terrain class parameter from one type of wind turbine to another type of wind turbine.

In this respect the term "rotational speed versus power curve" may define the optimal power or torque in a variable-speed operation.

The term "pitch curve" may define the pitch angle(s) at an operation below the nominal or rated power.

The term "controller gain" may be interpreted as the aggressiveness of the wind turbine controller with which the controller reacts (i.e. changes its output) on variations of at least one value for an operational parameter of the wind turbine.

The term "controller limit" may be used to define the allowed operational range of the wind turbine or the range of certain variables.

The term "safety limit" may define a threshold for which the controller enters another operational state if exceeded. For instance it could refer to an overspeed limit. For instance if the rotor or generator speed exceeds a certain level or threshold the wind turbine is shut down.

Adapting at least one safety limit may provide the advantage that the operating reliability of the wind turbine can be improved. Safety limits can be adjusted for instance for very rough conditions such as in cases of e.g. high turbulence.

According to a further embodiment of the invention the method further comprises adapting the value of the at least one controller setting parameter to the local conditions of the terrain, in which the wind turbine is erected. Thereby, the original controller setting parameter value(s), which is(are) related to the obtained value of the terrain class parameter, may be used as a starting point for an adaptive algorithm to further improve the controller setting parameter(s) in order to more precisely match the controller setting parameter value(s) to the exact local conditions of the site or the terrain, in which the wind turbine is erected.

According to a further aspect of the invention there is provided a control system for controlling the operation of a wind turbine. The provided control system comprises (a) a measurement arrangement for measuring the actual value of an operating variable of the wind turbine, and (b) a control unit. The control unit is configured (b1) for receiving the value of a terrain class parameter being indicative for the type of the terrain, in which the wind turbine is erected, (b2) for determining a control reference signal for a control action of the wind turbine based on the measured actual value of the operating variable and on the received value of the terrain class parameter, and (b3) for controlling the operation of the wind turbine based on the determined control reference signal.

Also the described control system is based on the idea that different environmental aerodynamic properties, conditions or aspects of a site, at which a wind turbine may be erected, are not independent from each other and can be clustered into different terrain classes. Using an appropriate terrain specific control reference signal may help in operating the wind turbine in such a manner that an optimal compromise can be achieved between (a) a maximization of the generated electrical power, (b) a reduction of mechanical loads acting on structural components of the wind turbine (in particular the rotor blades and/or the tower), and (c) a reduction of acoustic noise emissions.

According to a further aspect of the invention there is provided a wind turbine comprising (a) a rotor having at least one blade, wherein the rotor is rotatable around a rotational axis and the at least one blade extends radial with respect to the rotational axis, (b) a generator being mechanically coupled with the rotor, and (c) a control system as described above.

The generator may be connected directly or indirectly, e.g. via a drive train, with the rotor.

According to a further aspect of the invention there is provided a computer program for controlling the operation of a wind turbine. The computer program, when being executed by a data processor, is adapted for controlling and/or for carrying out the above described method for controlling the operation of a wind turbine.

As used herein, reference to a computer program is intended to be equivalent to a reference to a program element and/or to a computer readable medium containing instructions for controlling a computer system to coordinate the performance of the above described method.

The computer program may be implemented as computer readable instruction code in any suitable programming language, such as, for example, JAVA, C, C++, and may be stored on a computer-readable medium (removable disk, volatile or nonvolatile memory, embedded memory/processor, etc.). The instruction code is operable to program a computer or any other programmable device to carry out the intended functions. The computer program may be available from a network, such as the World Wide Web, from which it may be downloaded.

The invention may be realized by means of a computer program respectively software. However, the invention may also be realized by means of one or more specific electronic circuits respectively hardware. Furthermore, the invention may also be realized in a hybrid form, i.e. in a combination of software modules and hardware modules.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

Figure 1 shows a wind turbine in accordance with an embodiment of the invention.
Figure 2 shows in accordance with an embodiment of the invention a control system for controlling the operation of a wind turbine.

### Detailed Description

The illustration in the drawing is schematically. It is noted that in different figures, similar or identical elements are provided with the same reference signs or with reference signs, which are different from the corresponding reference signs only within the first digit.

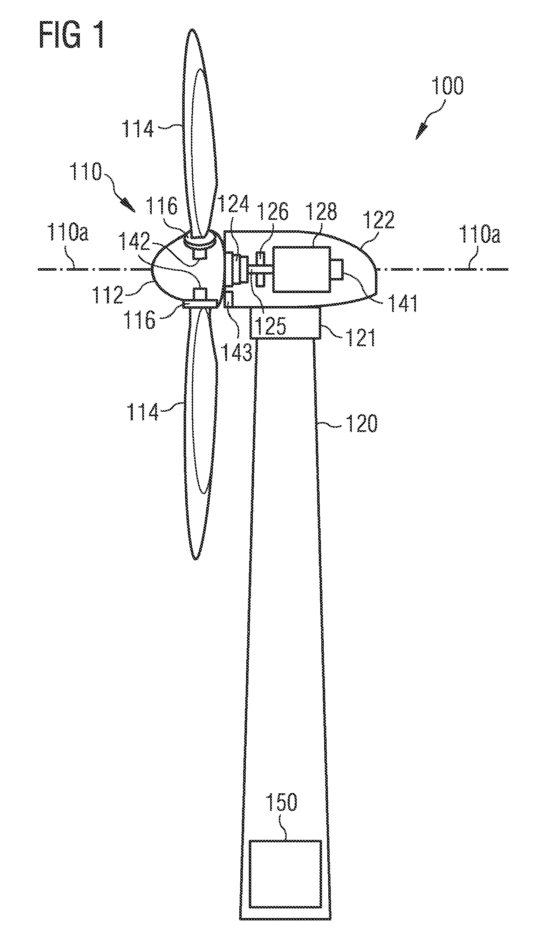

Figure 1 shows a wind turbine 100 according to an embodiment of the invention. The wind turbine 100 comprises a tower 120, which is mounted on a non-depicted fundament. On top of the tower 120 there is arranged a nacelle 122. In between the tower 120 and the nacelle 122 there is provided a yaw angle adjustment device 121, which is capable of rotating the nacelle 122 around a non depicted vertical axis, which is aligned parallel with the longitudinal axis of the tower 120. By controlling the yaw angle adjustment device 121 in an appropriate manner it can be made sure, that during a normal operation of the wind turbine 100 the nacelle 122 is always properly aligned with the current wind direction. However, in order to reduce the mechanical load acting on structural components of the wind turbine in particular during a strong wind condition the yaw angle adjustment device 121 can also be used to adjust the yaw angle to a position, wherein the nacelle 122 is intentionally not perfectly aligned with the current wind direction.

The wind turbine 100 further comprises a rotor 110 having three blades 114. In the perspective of Figure 1 only two blades 114 are visible. The rotor 110 is rotatable around a rotational axis 110a. The blades 114, which are mounted at a driving collar 112, which is also called a hub, extend radial with respect to the rotational axis 110a.

In between the driving collar 112 and a blade 114 there is respectively provided a blade adjustment device 116 in order to adjust the blade pitch angle of each blade 114 by rotating the respective blade 114 around a non depicted axis being aligned substantially parallel with the longitudinal extension of the respective blade 114. By controlling the blade adjustment device 116 the blade pitch angle of the respective blade 114 can be adjusted in such a manner that the maximum possible energy from the wind can be extracted. However, in order to reduce mechanical load acting on the respective blade 114 and remaining structure, the blade pitch angle can also be intentionally adjusted to a position, in which the efficiency is reduced, whereby the energy extraction will be reduced.

As can be seen from Figure 1, within the nacelle 122 there is provided an optional gear box 124. According to the embodiment described here the gear box 124 is used to convert the number of revolutions of the rotor 110 into a higher number of revolutions of a shaft 125, which is coupled in a known manner to a generator 128. Further, according to the embodiment described here, a brake 126 is provided in order to stop the operation of the wind turbine 100 or to reduce the rotational speed of the rotor 110 for instance (a) in case of an emergency, (b) in case of too strong wind conditions, which might harm the wind turbine 100, and/or (c) in case of an intentional saving of the consumed fatigue life time and/or the fatigue life time consumption rate of at least one structural component of the wind turbine 100. It is noted that the brake 126 is an optional component of the wind turbine.

The wind turbine 100 further comprises a control system 150 for operating the wind turbine 100 in a highly efficient manner. Apart from controlling for instance the yaw angle adjustment device 121 the depicted control system 150 is also used for controlling the rotational speed of the rotor 110 by adjusting the blade pitch angle of the rotor blades 114 and by determining an appropriate power generation or torque reference value for the wind turbine 100 in an optimized manner. Further, as will be described below in more detail, the control system 150 is used for adjusting the yaw angle of the nacelle 122 respectively of the rotor 110.

For controlling the operation of the wind turbine 100 the control system 150 is further connected to a rotational speed sensor 143, which according to the embodiment described here is connected to the gear box 124. The rotational speed sensor 143 feeds a speed signal to the control system 150, which is indicative for the actual rotational speed of the rotor 110.

According to the embodiment described here there is further provided a not depicted tower acceleration sensor for measuring the acceleration of the tower in a side-to-side direction and/or in a back-and-forth (denoted fore-aft) direction. Measurement values for tower accelerations can provide valuable information about the tower movement. An appropriate operational control procedure for the wind turbine 100 takes into account such tower acceleration measurement values and is adapted to damp tower oscillations.

Further, the wind turbine 100 comprises (a) a power sensor 141 being connected to the generator 128 and (b) angle sensors 142, which, according to the embodiment described here, are connected to the respective blade adjustment device 116. The power sensor 141 provides information about the actual power production of the wind turbine 100 to the control system 150. The angle sensors 142 provide information about the actual blade pitch angle settings of the rotor blades 114. It is mentioned that the power sensor may also be connected to a non depicted power converter of the wind turbine 100.

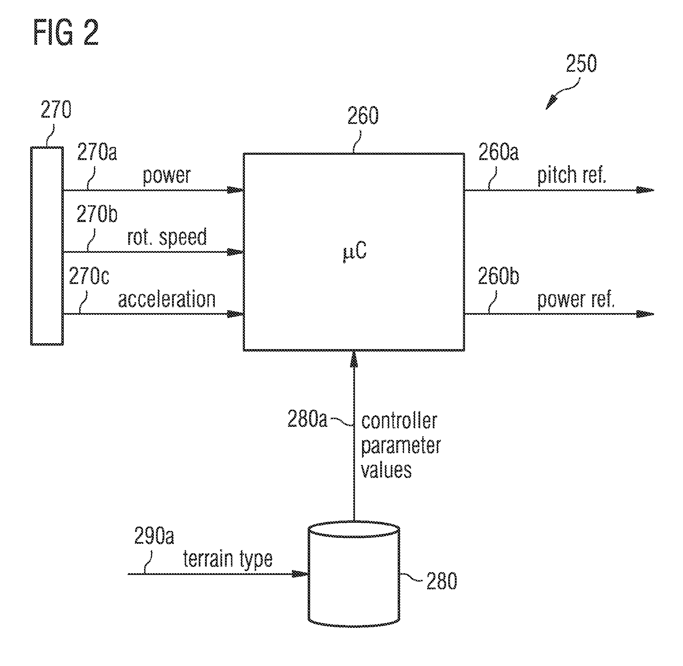

Figure 2 shows the control system for controlling the operation of a wind turbine in accordance with an embodiment of the invention. In Figure 2 the control system is denominated with reference numeral 250.

The control system 250 comprises a wind turbine controller 260, which is connected to a measurement arrangement 270. The measurement arrangement 270 comprises the power sensor 141 and the rotational speed sensor 143, which are shown in Figure 1. These sensors 141 and 143 provide a power signal 270a and a rotational speed signal 270b. According to the specific embodiment described here the measurement arrangement 270 further comprises a not depicted tower acceleration sensor providing a tower acceleration signal 270c. The tower acceleration sensor may be mounted e.g. on the top of the tower or in the nacelle. As can be seen from Figure 2, these signals 270a, 270b, and 270c are received from the wind turbine controller 260.

The control system 250 further comprises a database 280 being connected to the wind turbine controller 260. In the database 280 there is stored a lookup table, which comprises various entries each being assigned to a particular type of a terrain. Specifically, each entry represents a particular value of a terrain class parameter being indicative for the type of the terrain. Examples for terrain classes are (a) offshore terrain, (b) forest terrain, (c) valley, (d) coastal terrain, (e) city terrain, (f) low vegetation zone, (g) hill, (h) cliff, (i) small mountain, (j) medium mountain and (k) high mountain.

In the lookup table 280 each terrain class is associated with the values 280a of controller setting parameters, which are considered as to be appropriate for a wind turbine operational control for a wind turbine which has been erected within the respective terrain.

It is mentioned that the lookup table may be replaced or may be complemented by a processor which is programmed in such a manner that a mathematical function determines appropriate or modified values for the controller setting parameters.

The values of the controller setting parameters may described for instance (a) a nominal or rated rotational speed of the rotor of the wind turbine, (b) a nominal or rated power generation of the wind turbine, (c) a rotational speed versus power curve or rotational speed versus torque curve, (d) a pitch curve, (e) one or more controller gains, (f) one or more controller limits, and/or (g) one or more safety limits.

When a wind turbine is erected at a site corresponding to a particular terrain class an operator inputs the respective terrain type input value 290a to the database 280 and the database forwards the corresponding controller setting parameter values 280a to the wind turbine controller 260. In response to the received power signal 270a, the received rotational speed signal 270b and the received tower acceleration signal 270c and as a function of the received controller setting parameter values 280a the controller 260 determines a pitch angle control reference signal 260a and a power (or torque) control reference signal 260b, which values are used for the further operational control of the wind turbine.

It is again pointed out that the above mentioned control reference signal are mentioned as an example only. It is also possible that other control reference signals such as in particular a yaw angle control signal may be used instead of or in addition to the pitch angle and/or the power control reference signal mentioned above.

At this point it is again mentioned that the power (control) reference signal could as well be a torque (control) reference signal.

A rotational speed versus power curve may be used at operation below a rated rotational speed to set the power (or torque) control reference signal 260b as function of the rotational speed (or wind speed) and hereby operate the wind turbine at the optimal rotational speed. Similarly, a pitch curve may be used to set the optimal pitch angle (= the pitch angle control reference signal 260a) as a function of the power (or torque, or rotational speed, or wind speed). The optimal compromise between power maximization, mechanical load reduction, and acoustic noise reduction can only be obtained if the optimal controller setting parameter values 280a are applied, which are adapted to the local conditions of the site at which the respective wind turbine is erected. Further, it is mentioned that additionally controller gains, controller limits, safety limits etc. may be changed/affected as well in order to adapt and/or optimize the operation of the wind turbine.

According to the embodiment described here the optimal controller settings depend on the wind shear, the air density, the turbulence intensity, the inclination, and the wind direction stability.

It is pointed out that when applying the described location specific / terrain class specific operational control of a wind turbine there is a potential increase in Annual Energy Production (AEP) of at least 1%. For sites where the conditions are average (or "normal") the potential is smaller.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

## Claims

1. A method for controlling the operation of a wind turbine, the method comprising
measuring the actual value (270a) of an operating variable of the wind turbine (100),
obtaining the value (290a) of a terrain class parameter being indicative for the type of the terrain, in which the wind turbine (100) is erected,
determining a control reference signal (260a) for a control action of the wind turbine (100) based on the measured actual value (270a) of the operating variable and on the obtained value (290a) of the terrain class parameter, and
controlling the operation of the wind turbine (100) based on the determined control reference signal (260a).

2. The method as set forth in the preceding claim, wherein the value (290a) of the terrain class parameter depends on at least one environmental aerodynamic property of the terrain, in which the wind turbine (100) is erected.

3. The method as set forth in the preceding claim, further comprising
estimating the at least one environmental aerodynamic property during an operation of the wind turbine.

4. The method as set forth in one of the preceding claims 2 and 3, wherein
the environmental aerodynamic property is at least one of the group comprising (a) the wind shear, (b) the air density, (c) the inclination angle of the wind, (d) the turbulence intensity, and (e) the wind direction stability.

5. The method as set forth in any one of the preceding claims, wherein
the value (290a) of the terrain class parameter describes one of the group comprising at least (a) an offshore terrain, (b) a forest terrain, (c) a valley, (d) a coastal terrain, (e) a city terrain, (f) a low vegetation zone, (g) a hill, (h) a cliff, (i) a small mountain, (j) a medium mountain, and (k) a high mountain.

6. The method as set forth in any one of the preceding claims, further comprising
measuring the actual value (270b, 270c) of at least one further operating variable of the wind turbine (100), wherein determining the control reference signal (260a) for a control action of the wind turbine (100) is further based on the measured actual value (270b, 270c) of the further operating variable.

7. The method as set forth in the preceding claim,
wherein the operating variable is a first input signal for a controller of the wind turbine (100) and in particular one of
(a) the power production of the wind turbine,
(b) the rotational speed of the wind turbine rotor and
(c) the acceleration of the wind turbine tower wherein the further operating variable is a second input signal for a controller of the wind turbine (100) and in particular another one of
(a) the power production of the wind turbine,
(b) the rotational speed of the wind turbine rotor and
(c) the acceleration of the wind turbine tower.

8. The method as set forth in any one of the preceding claims, further comprising
determining a further control reference signal (260b) for a further control action of the wind turbine (100) based on
- the measured actual value (270a) of the operating variable and/or the measured actual value (270b, 270c) of the further operating variable and on
- the obtained value (290a) of the terrain class parameter, wherein
controlling the operation of the wind turbine (100) is based on the determined control reference signal (260a) and on the determined further control reference signal (260b).

9. The method as set forth in the preceding claim, wherein the control action of the wind turbine (100) is related to one variable of the group comprising the pitch angle of at least one blade of the wind turbine, the yaw angle of the wind turbine (100), and the electric power and/or torque being generated by the wind turbine (100), and
the further control action is related to another variable of the group comprising the pitch angle of at least one blade of the wind turbine, the yaw angle of the wind turbine (100), and the electric power and/or torque being generated by the wind turbine (100).

10. The method as set forth in any one of the preceding claims, wherein
the value (290a) of the terrain class parameter is indicative for the value (280a) of at least one controller setting parameter taken from
(a) a nominal rotational speed of the rotor (110) of the wind turbine (100),
(b) a nominal power generation of the wind turbine (100),
(c) a rotational speed versus power curve or rotational speed versus torque curve, (d) a pitch curve,
(e) one or more controller gains,
(f) one or more controller limits, and
(g) one or more safety limits, and wherein
the control reference signal (260a) for the control action is determined based on the value (280a) of the at least one controller setting parameter.

11. The method as set forth in the preceding claim, further comprising
adaptively adapting the value (280a) of the at least one controller setting parameter to the local conditions of the terrain, in which the wind turbine (100) is erected.

12. A control system for controlling the operation of a wind turbine, the control system (150, 250) comprising
a measurement arrangement (270) for measuring the actual value (270a) of an operating variable of the wind turbine (100), and
a control unit (260)
(a) for receiving the value (290a) of a terrain class parameter being indicative for the type of the terrain, in which the wind turbine (100) is erected,
(b) for determining a control reference signal (260a) for a control action of the wind turbine (100) based on (b1) the measured actual value (270a) of the operating variable and on (b2) the received value (290a) of the terrain class parameter, and
(c) for controlling the operation of the wind turbine (100) based on the determined control reference signal (260a).

13. A wind turbine comprising
a rotor (110) having at least one blade (114), wherein the rotor (110) is rotatable around a rotational axis (110a) and the at least one blade (114) extends radial with respect to the rotational axis (110a),
a generator (128) being mechanically coupled with the rotor (110), and
a control system (150, 250) as set forth in the previous claim.

14. A computer program for controlling the operation of a wind turbine (100), the computer program, when being executed by a data processor, is adapted for controlling and/or for carrying out the method as set forth in any one of the claims 1 to 11.
